# FASCICULE DE BREVET EUROPEEN

(11) **EP 3 558 582 B1**
(45) Date de publication et mention de la délivrance du brevet: **25.09.2024**
(21) Numéro de dépôt: 17885366.9
(22) Date de dépôt: 15.11.2017
(51) Int. Cl.: B23P 6/00, B23C 3/18, F03B 11/00, B23Q 9/02, B23Q 17/24, B23B 3/26, B23Q 17/22, B23Q 1/01, B23P 23/04

(54) **APPAREIL DE RECONDITIONNEMENT DE PIÈCE LOURDE ET PROCÉDÉ**
VORRICHTUNG ZUR ERNEUERUNG EINES SCHWEREN WERKSTÜCKS UND VERFAHREN
APPARATUS FOR RECONDITIONING A HEAVY WORKPIECE AND METHOD

(30) Priorité: 23.12.2016 FR 1663355
(43) Date de publication de la demande: 30.10.2019
(73) Titulaire: 9349-3039 Québec Inc., Verchères, Québec J0L 2R0 (CA)
(72) Inventeur: GAGNE, Jonathan, Verchères, Québec J0L 2R0 (CA)
(74) Mandataire: IPAZ
(86) Numéro de dépôt international: PCT/CA2017/051360
(87) Numéro de publication internationale: WO 2018/112602

(56) Documents cités:
- EP-A2- 0 369 891
- CA-A1- 2 719 190
- CN-A- 102 335 821
- CN-A- 102 335 821
- CN-U- 204 603 567
- FR-A1- 2 906 744
- US-A- 2 122 662
- US-A- 3 608 172
- US-A- 4 177 610
- US-A- 4 197 629

## Description

### Domaine

L'invention concerne le domaine de reconditionnement de pièces lourdes, notamment celles retrouvées dans les centrales hydroélectriques et les éoliennes, telles que les pièces composant les turbines hydroélectriques.

### Contexte

Les turbines hydroélectriques et les éoliennes sont composées de pièces volumineuses et avec un poids important. Plusieurs de ces pièces peuvent peser des centaines de tonnes et s'étendre sur plusieurs mètres. Par exemple, la turbine Francis, une turbine hydraulique, adaptée à des hauteurs de chute moyennes et des puissances et débits moyens et forts, peut peser autour de 450 tonnes et avoir un diamètre d'approximativement dix mètres. Par ailleurs, la turbine Kaplan est une turbine hydraulique à hélices, adaptée pour les faibles chutes, certaines ayant un diamètre de 11 mètres.

La taille et le poids de ces pièces rendent le reconditionnement et l'entretien de celles-ci difficiles. Des pièces lourdes qui ont besoins de reconditionnement dans les centrales hydroélectriques sont, par exemple, une roue mobile de type Francis ou de type Kaplan, une aube directrice, un aspirateur, un alternateur, des aubes de roue, un arbre ou un cercle de vannage.
On connaît ainsi le document FR 2 906 744 A1 décrivant un dispositif pour l'usinage d'une pièce de grand diamètre d'axe Delta disposé sensiblement verticalement, comprenant un support adaptable sur la pièce à usiner, des moyens d'usinage qui sont adaptés sur le support pour être mobiles par rapport au support et à la pièce à usiner, et une unité de commande des moyens d'usinage Ledit document FR 2 906 744 A1 décrit un procédé selon le préambule de la revendication 1.

En outre, le document US 2 122 662 décrit un dispositif selon le préambule de la revendication 5.

Dans le cas des turbines hydroélectriques, vu leur taille et poids, il est difficile vu l'état de la technique dans l'art antérieur d'effectuer les réparations sur place, soit dans la centrale hydroélectrique. D'ailleurs, il est fréquent de devoir déplacer la pièce de la turbine hydraulique à un site extérieur, possédant l'infrastructure pour effectuer le reconditionnement. Cependant, le déplacement de la pièce de la turbine hydraulique est long, coûteux et grandement inconvénient pour les raisons suivantes.

Premièrement, les centrales hydroélectriques, vue la place prise par celles-ci, sont souvent localisées loin de milieux industrialisés où existent des sites pour effectuer le reconditionnement. Ainsi, il est nécessaire de transporter la pièce de la turbine durant de longues périodes afin de se rendre au site. Ce déplacement est fastidieux considérant la taille de la pièce à reconditionner. Notamment, il faut transporter celle-ci pour de longues distances, en évitant, par exemple, des passerelles. Ce déplacement peut causer un barrage temporaire des routes sur lesquelles la pièce est transportée. Le transport est également fort coûteux en gaz et requiert souvent de l'équipement spécial ou des véhicules de transports spécifiques pour sécuriser la pièce lourde lors du transport. Par ailleurs, le transport de la pièce par la route peut exiger l'obtention de permis spécifiques. Il y a également des risques d'accidents liés avec le transport. D'autre part, dans les pays où il y a des risques de gel, il est possible de devoir attendre des périodes de dégel avant de transporter la pièce lourde, ce qui résulte dans des délais additionnels.

Deuxièmement, durant la période marquant le transport de la pièce lourde au site de reconditionnement, incluant le temps pris pour son reconditionnement, ainsi que le temps nécessaire pour rapporter la pièce lourde afin de réinstaller celle-ci, la turbine en question n'est pas fonctionnelle. Ainsi, il y a une perte de production d'électricité liée avec la période de déplacement et de reconditionnement de la pièce. Vu le temps pris pour le déplacement, ces pertes sont souvent très importantes et sont préférablement à éviter.

Ainsi, les coûts et délais associés au reconditionnement d'une pièce lourde, soit celle d'une éolienne ou turbine hydraulique, sont très importants. Le développement d'un système qui évite, au moins en partie, ces coûts et délais seraient préférables.

### Sommaire

Le demandeur a développé un appareil de reconditionnement à précision portatif et entreposable qui peut être utilisé dans une centrale hydroélectrique ou près du système de production d'électricité afin d'effectuer le reconditionnement des pièces lourdes. Cet appareil permet le reconditionnement des pièces lourdes tout en évitant les coûts et le temps perdu associé avec le transport de la pièce à un site extérieur.

L'appareil de reconditionnement peut être assemblé à partir de plusieurs segments afin qu'il soit facile à transporter et ranger. Une étape de recalage de l'appareil est effectuée durant et après son installation afin de bien ajuster les dimensions et le positionnement de l'appareil, avant le positionnement de la pièce lourde par rapport à celle-ci, et après le positionnement de la pièce lourde. Le recalage est effectué avec un outil de recalage à laser afin d'obtenir la précision requise lors de cette étape. Il est également important que l'étape de recalage prenne en compte le positionnement de la pièce lourde vis-à-vis les composantes de l'appareil de reconditionnement, tel que le gabarit.

Une fois le recalage complété, il est possible d'effectuer les réparations de la pièce lourde à précision, les dimensions de la pièce lourde et de l'appareil de reconditionnement connues et vérifiées grâce à l'étape de recalage. La pièce lourde peut ensuite être réinstallée. L'appareil de reconditionnement peut aussi être démantelé et rangé, afin que celui-ci minimise l'espace prise lorsqu'il n'est pas en utilisation. L'appareil peut être ressorti et réutilisé lors de sa prochaine utilisation.

Un premier aspect de l'invention est un procédé de reconditionnement selon la revendication 1.

L'assemblage du gabarit est effectué afin que le gabarit soit disposé autour de la pièce à reconditionner, la monture inclut un portique, et le gabarit appuyant le portique à ses deux extrémités.

Le gabarit est configuré afin qu'une partie du gabarit se déplace par rapport au plancher, le reconditionnement pouvant inclure le déplacement de cette partie du gabarit par rapport au plancher.

Selon un mode de réalisation préféré du procédé, le procédé peut également inclure que le déplacement de la partie du gabarit s'effectue à l'aide d'un système à précision de pignons à galets montés sur roulement qui engraine avec une crémaillère jointe au gabarit.

Le gabarit a un pion central et un plateau tournant de forme annulaire centré autour du pion central, l'étape d'assemblage comprenant la disposition de la pièce à reconditionner autour du pion central et le portique appuyé à une de ses dites deux extrémités sur le pion central et à l'autre de ses dites deux extrémités sur le plateau tournant.

Selon un mode de réalisation préféré du procédé, le plateau tournant de forme annulaire peut avoir des segments formant deux anneaux superposés, l'assemblage pouvant inclure la disposition et l'assemblage des segments formant les deux anneaux superposés autour de la pièce à reconditionner. L'assemblage peut aussi avoir le positionnement du plateau tournant et de la pièce à reconditionner afin que le plateau tournant et la pièce à reconditionner soient concentriques.

Le procédé comprend, avant l'assemblage, le positionnement de pions sur le plancher à l'aide d'un outil à recalage à précision laser et l'ajustement de la hauteur des pions à l'aide d'un outil à recalage à précision laser, les pions positionnés pour recevoir la pièce à reconditionner et le gabarit.

L' assemblage peut aussi prévoir boulonner les pions au plancher.

Le procédé peut aussi avoir le rajustement des pions à l'aide d'un outil à recalage à précision laser une fois que les pions ont reçu la pièce à reconditionner et le gabarit afin de compenser pour la déformation du plancher sur lequel sont placés les pions qui ont reçu la pièce à reconditionner et le gabarit.

L' assemblage peut aussi inclure l'utilisation de cales entre les pions et le gabarit et entre les pions et la pièce à reconditionner afin de minimiser l'usure des pions lors du reconditionnement.

Le bras robotique de précision porte un outil de soudage adapté à ajouter du métal à la pièce lourde, et le reconditionnement peut prévoir le soudage de la pièce lourde à reconditionner.

Un autre mode de réalisation préféré est un procédé de production d'électricité renouvelable par le biais d'un système de production d'électricité composé de pièces lourdes utilisées dans le système de production d'électricité. Le procédé de production d'électricité inclut la production de l'électricité, la détermination si une pièce de la du système de production d'électricité a besoin de reconditionnement. Le procédé a aussi le reconditionnement selon le procédé de reconditionnement sur place décrit dans les présentes, et le recommencement de la production d'électricité.

Le procédé de production d'électricité peut être un de production d'hydroélectricité, le système de production d'électricité peut être une centrale hydroélectrique, et la composante du système de production d'électricité peut être une pièce d'une turbine hydraulique. Le procédé peut aussi être un procédé de conversion d'énergie cinétique du vent en énergie électrique (énergie éolienne), le système de production d'électricité étant une éolienne, et la composante du système de production d'électricité une composante de l'éolienne. La pièce peut être soit une roue mobile de type Francis, une roue mobile de type Kaplan, une aube directrice, un aspirateur, un alternateur, une aube de roue, un arbre, une couronne, un fond supérieur, un fond inférieur ou un cercle de vannage. La pièce peut aussi être soit une ou des pales, un système d'orientation d'une éolienne, le multiplicateur, la nacelle ou le moyeu de commande du rotor.

Un deuxième aspect de l'invention est un appareil de reconditionnement selon la revendication 5.

Selon un mode de réalisation préféré de l'appareil, le bras robotique peut inclure au moins un appareil d'usinage.

Selon un mode de réalisation préféré de l'appareil, le au moins un appareil d'usinage peut inclure un outil de soudage adapté à ajouter du métal à la pièce.

Selon un mode de réalisation préféré de l'appareil, le plateau tournant peut inclure une partie fixe et une partie mobile, la partie fixe étant connectée à la partie mobile par un système de roulement à précision.

Selon un mode de réalisation préféré de l'appareil, le système de roulement à précision peut inclure un système à précision de pignons à galets montés sur roulement qui engraine avec une crémaillère jointe audit gabarit.

L'appareil inclut au moins trois pions ajustables en hauteur pour recevoir le plateau tournant afin de permettre une mise à niveau dudit plateau tournant.

Chacun des pions ajustables en hauteur pour recevoir le plateau tournant peut inclure une cale configurée pour être placée entre le plateau tournant et le chacun des pions pour recevoir le plateau tournant.

L'appareil inclut au moins trois pions ajustables en hauteur pour recevoir la pièce lourde et afin de permettre une mise à niveau de la pièce lourde.

Chacun des pions ajustables en hauteur pour recevoir la pièce lourde peut inclure une cale configurée pour être placée entre la pièce lourde et le chacun des pions en hauteur pour recevoir la pièce lourde.

Le plateau tournant peut être composé d'un assemblage de segments en forme d'arc.

Un aspect ne faisant pas partie des revendications est un gabarit robotique servant à l'usinage ou au reconditionnement à précision d'une pièce lourde montée au plancher. Le gabarit inclut un plateau tournant de forme annulaire composé d'un assemblage de segments en forme d'arc pour constituer une partie fixe et une partie mobile, la partie fixe étant connectée à la partie mobile par un système de roulement à précision, le plateau tournant étant capable d'entourer la pièce lourde montée au plancher. Le gabarit inclut au moins trois pions ajustables en hauteur afin de permettre une mise à niveau dudit plateau tournant. Le gabarit inclut un système de déplacement à précision incluant le système de roulement à précision pour déplacer la partie mobile par rapport à la partie fixe du plateau tournant.

Selon un exemple du gabarit, le gabarit peut inclure une monture pour un outil robotique sur la partie mobile permettant l'outil d'accéder à la pièce lourde montée au plancher de tous les côtés.

Selon un exemple du gabarit, la monture peut inclure un portique ayant deux extrémités, le portique appuyé à une première de ses deux extrémités sur le plateau tournant.

Selon un exemple du gabarit, le gabarit peut inclure un pion central.

Selon un exemple du gabarit, le portique peut être appuyé à une deuxième de ses deux extrémités sur le pion central.

Selon un exemple du gabarit, le système de roulement à précision peut être un système à précision de pignons à galets montés sur roulement qui engraine avec une crémaillère jointe au gabarit.

Selon un exemple du gabarit, chacun des pions peut inclure une cale configurée pour être placée entre le plateau tournant et le chacun des pions.

### Description des figures

L'invention sera mieux comprise à l'aide de la description qui suit, faisant référence aux figures annexées suivantes:
La **figure 1A** est une vue en perspective du dessus illustrant un appareil de reconditionnement à précision exemplaire avec une pièce lourde exemplaire.
La **figure 1B** est une vue en perspective du dessous illustrant un appareil de reconditionnement à précision exemplaire avec une pièce lourde exemplaire.
La **figure 2** est une vue en perspective du dessus illustrant un gabarit exemplaire et des pions exemplaires, avec des vues magnifiées de différentes pièces composant le gabarit.
La **figure 3** est une vue en perspective du dessus d'un portique exemplaire sur lequel est monté un bras robotique de précision exemplaire portant un appareil de reconditionnement exemplaire.
La **figure 4** est une vue du devant d'un pion exemplaire avec une cale exemplaire.
La **figure 5** est une vue du devant d'un pion central exemplaire.
La **figure 6** est un organigramme d'une méthode exemplaire de reconditionnement d'une pièce lourde en utilisant un appareil de reconditionnement.
La **figure 7** est une vue en perspective d'un gabarit exemplaire et de pions exemplaires et d'un système de recalage incluant un outil à recalage à précision laser.

### Description détaillée

Afin d'éviter les pertes liées au transport de la pièce lourde à un site extérieur à fins de reconditionnement, il est avantageux de développer un appareil de reconditionnement utilisable sur place, soit près de la centrale hydroélectrique, avec un degré de précision au moins comparable à celui retrouvé à ces sites de reconditionnement extérieurs. Cependant, vue la taille (ex : plus de dix mètres de diamètre) et le poids (ex : des centaines de tonnes) de la pièce à reconditionner, un tel appareil doit être capable de supporter une telle pièce lourde, tout en offrant un moyen de reconditionner cette pièce à un niveau de précision suffisant pour ne pas que la pièce perde sa fonctionnalité lorsqu'elle est réinstallée suivant son reconditionnement.

Cependant, afin de réaliser le reconditionnement sur place d'une pièce lourde, telle que celles constituant une turbine hydraulique ou éolienne, l'appareil de reconditionnement est préférablement portable et peut être rangé lorsqu'il n'est pas utilisé, vu la taille nécessaire de l'appareil pour accommoder de telles pièces lourdes.

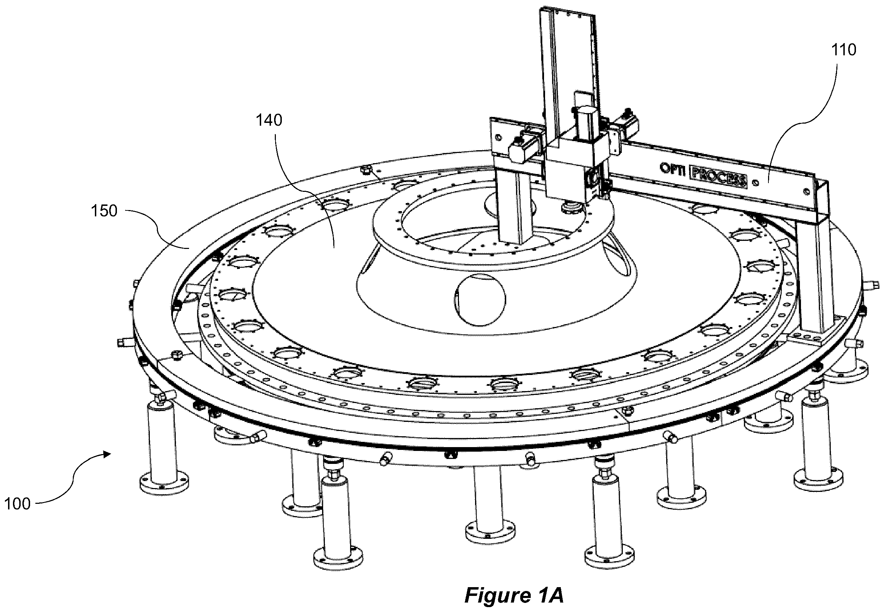

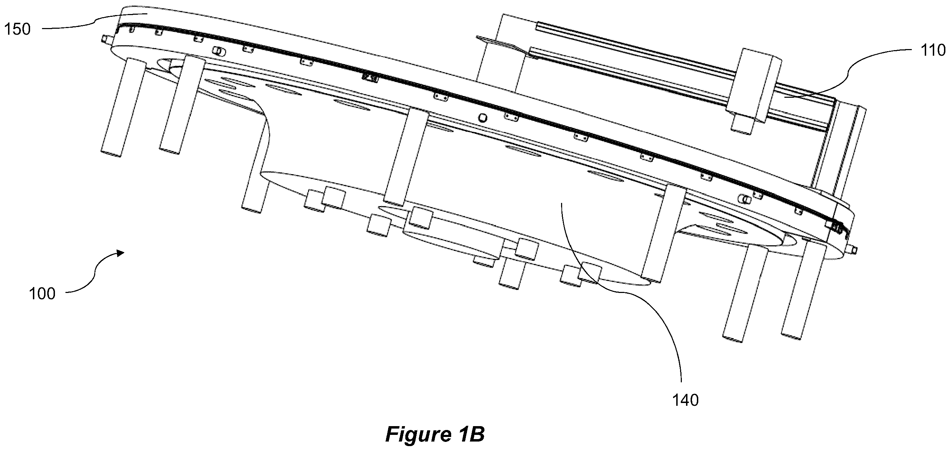

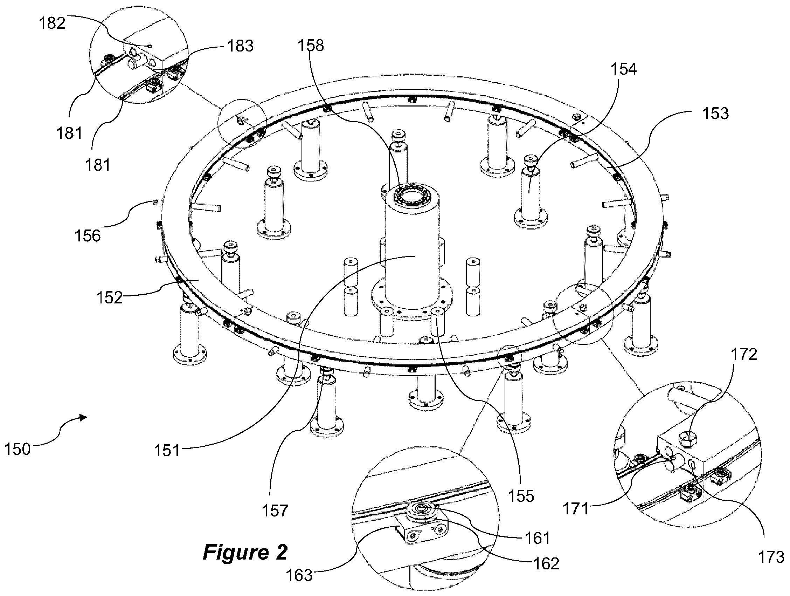

Les figures 1A et 1B illustrent un appareil de reconditionnement à précision exemplaire 100 et une pièce lourde 140 à reconditionner. Cet appareil 100 a un gabarit 150, et un portique 110 sur lequel est monté un bras robotique de précision exemplaire 115 portant un appareil de reconditionnement exemplaire 116. Le gabarit 150 et la pièce lourde 100 peuvent être supportés sur des pions 154, telles que ceux illustrés à la Figure 2.

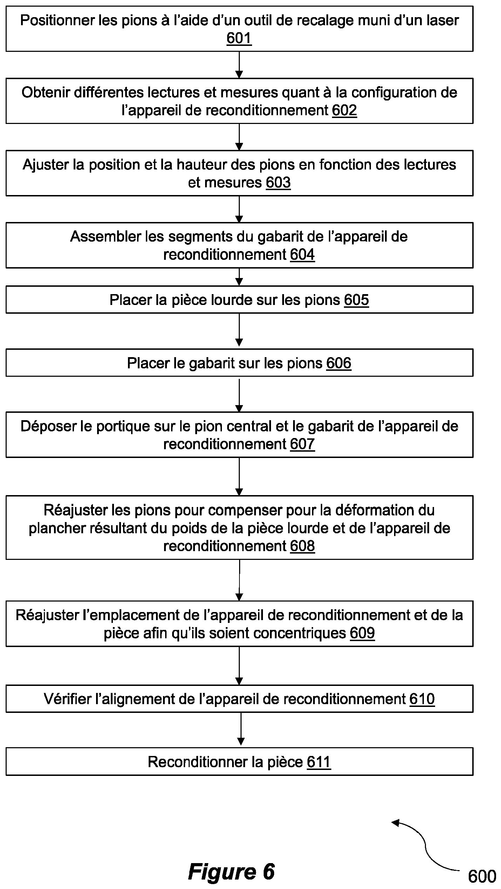

Afin d'obtenir le degré de précision nécessaire lors du reconditionnement, le recalage de l'appareil de reconditionnement 100, incluant son gabarit 150, est nécessaire. Ceci sera démontré avec la Figure 6, illustrant un procédé exemplaire de reconditionnement d'une pièce lourde à l'aide d'un appareil de reconditionnement à précision, tel que l'appareil de reconditionnement à précision 100. Le procédé de reconditionnement est effectué sur une surface dure, tel qu'un plancher, comme cette surface doit supporter le poids de l'appareil de reconditionnement et la pièce lourde et ne pas causer, par exemple, de tassement excessif du sol. Par ailleurs, toute déformation du sol ou du plancher doit être prise en compte lors du recalage pour obtenir la précision nécessaire lors du reconditionnement.

La première étape 601 est caractérisée par le positionnement des pions sur le plancher. Dans certains exemples, certains pions vont recevoir le gabarit et d'autres pions vont recevoir la pièce lourde. Ainsi, les pions doivent être distribués sur le plancher dans une configuration spécifique afin de recevoir le gabarit et la pièce lourde, mais également être placés les uns par rapport aux autres afin de bien distribuer le poids de la pièce lourde et du gabarit. Ainsi, l'emplacement des pions est important à ces fins.

Le positionnement des pions peut être effectué à l'aide d'un outil à recalage à précision, par exemple, un laser de poursuite avec une sonde, tel qu'il est connu dans l'art. Dans l'exemple du laser à poursuite avec une sonde, la sonde est utilisée pour mesurer des distances entre elle-même et le laser, l'utilisateur ajustant la position des pions ou le recalage et fonction des lectures obtenues du laser à poursuite. Avec l'outil de recalage à laser, il est possible de positionner avec précision les pions à des distances fixes les uns par rapport aux autres. Dans certains exemples, il y a huit pions pour recevoir la pièce lourde et huit pions pour recevoir le gabarit. Il est apprécié que le nombre de pions recevant respectivement la pièce lourde et le gabarit puisse varier dépendamment, par exemple, du poids, des dimensions ou de la taille de la pièce.

Il peut également y avoir le positionnement de sous-pions, étant dans certains exemples plus petits que les autres pions, afin de fournir un support additionnel à la pièce lourde. Dans certains exemples, les sous-pions peuvent être placés autour d'un pion central, l'emplacement des sous-pions pouvant être calculé en utilisant les mêmes techniques de recalage décrites dans les présentes.

L'emplacement des pions peut être effectué à l'aide d'un logiciel, calculant l'emplacement de chaque pion. L'outil de recalage à laser peut identifier les lieux sur le plancher où chaque pion devrait être placé.

Suivant les lectures obtenues d'un outil à mesurer à l'étape 602, la hauteur des pions est également ajustée afin de recevoir le gabarit et la pièce à reconditionner. Dans certains cas, chaque pion peut avoir une vis ajustable permettant l'ajustement de la hauteur de chaque pion. Dans certains cas, l'outil à mesurer peut être de l'outil de recalage à laser, où la sonde du laser à poursuite peut être placée à la tête de chaque pion afin de calculer sa hauteur. Il est ainsi possible d'effectuer un premier ajustement de la hauteur et si nécessaire, aussi de la position, de chaque pion en fonction des lectures reçues du laser à poursuite à l'étape 603. Dans certains exemples, la hauteur de chaque pion peut être calculée avec un galon à mesurer, où une étape de recalage à plus grande précision sera effectuée à une étape ultérieure, soit lorsque le gabarit et la pièce lourde sont placés sur les pions.

Il est également possible, dans certains exemples, d'installer un pion central qui recevra, par exemple, un des côtés du portique. Le pion central peut être installé et ajusté en utilisant les mêmes étapes de recalage que celles utilisées pour installer les autres pions.

Dans certains exemples, les pions sont également boulonnés au plancher afin de minimiser tout déplacement de ceux-ci durant les étapes d'installation de l'appareil de reconditionnement et le reconditionnement lui-même. Il est apprécié que toute autre technique pour ancrer les pions au plancher puisse être utilisée.

Une fois les pions bien placés et ajustés, le gabarit est assemblé à l'étape 604. Le gabarit peut être un plateau tournant (tel que démontré, par exemple, à la Figure 1A) de forme annulaire composée de plusieurs segments. Dans certains exemples, la forme annulaire du gabarit est adaptée pour faire le tour de la pièce lourde à reconditionner (ex: quand la pièce lourde a la forme d'un disque, telle qu'une roue Kaplan ou une roue Francis). Cependant, la forme du gabarit peut également varier dépendamment de la forme et caractéristiques de la pièce lourde à reconditionner.

Dans le cas où le gabarit est composé de plusieurs segments formant un plateau tournant annulaire, les segments peuvent être joints ensembles pour former l'anneau avant d'être déposés sur les pions. Dans quelques exemples, le plateau tournant est constitué par des quartiers formant l'anneau Cependant, le nombre de segments peut varier. Le gabarit peut également être formé par deux anneaux segmentés superposés, les deux anneaux segmentés formant le plateau tournant. Dans ces exemples, les segments du premier anneau peuvent être installés en premier, et ensuite les segments formant le deuxième anneau sont installés par-dessus et en deuxième. Dans d'autres exemples, les deux anneaux peuvent être assemblés ensemble, tous les deux déposés par la suite, ensemble, sur les pions.

La pièce lourde est par la suite déposée sur les pions qui sont placés pour recevoir la pièce lourde à l'étape 605. Vu la taille et la pesanteur de la pièce lourde, celle-ci peut également être transportée et déposée sur les pions à l'aide d'un pont roulant.

Ensuite, le gabarit est positionné sur les pions qui sont placés pour recevoir ceci à l'étape 606. Le gabarit peut être installé sur les pions avec un pont roulant. Le gabarit peut être placé autour de la pièce lourde.

Dans certains exemples, il est également possible de placer des cales entre les têtes des pions et le gabarit, et les têtes des pions et la pièce lourde afin de minimiser l'usure, telle que l'usure de la pièce lourde causée lors du centrage de celle-ci.

Subséquemment, le portique est déposé et installé sur l'appareil de reconditionnement à l'étape 607. Le portique peut être aussi transporté par un pont roulant. Dans certains exemples, le portique est joint à un côté au pion central, et de l'autre côté au plateau tournant, et, par exemple, boulonner à ses deux extrémités (ex : la surface supérieure de l'anneau du dessus du plateau tournant lorsque ceci est composé de deux anneaux). Il est apprécié que d'autres moyens pour ancrer les extrémités du portique au pion central et/ou le plateau tournant puissent être utilisés. Par ailleurs, dans d'autres exemples, les dimensions du portique peuvent changer et le portique peut être ancré à différents endroits, tel qu'un portique qui fait le diamètre du gabarit (ex : lorsque le gabarit est de forme annulaire), les deux extrémités du portique ancrées au gabarit à deux endroits sur celui-ci diamétralement opposés.

Le portique est également configuré pour accommoder le bras robotique joint à l'outil de reconditionnement. La configuration entre l'outil de reconditionnement et le bras robotique, placé sur le portique, peut permettre à l'outil de reconditionnement d'avoir accès à la totalité d'au moins une surface de la pièce lourde afin d'effectuer le maintien nécessaire. L'outil de reconditionnement peut être, par exemple, un outil d'usinage, adapté à enlever du matériel de la pièce lourde. L'outil de reconditionnement peut aussi être un outil de soudage pour ajouter du métal à la pièce lourde. Il est apprécié que l'outil de reconditionnement puisse être tout autre appareil, tel qu'un outil de décapage, pour effectuer le reconditionnement de la pièce lourde.

Une fois le portique, le gabarit et la pièce lourde sont installés, il est préférable d'effectuer un deuxième recalage à l'étape 608. Cette étape de recalage est souvent nécessaire parce que le poids de la pièce lourde (et du gabarit) sur le plancher cause fréquemment une déformation du plancher. Cette déformation du plancher cause également un changement de la position du gabarit et portique par rapport à la pièce lourde. Ainsi, il est nécessaire d'effectuer le nivellement et le recalage du gabarit pour réajuster la position de l'appareil de reconditionnement pour compenser pour la déformation du plancher. Le recalage et nivellement peuvent être effectués à l'aide de l'outil de recalage à laser. Dans le cas du laser à poursuite et sa sonde, la sonde peut participer à la prise de mesures en étant placés à différents endroits sur le gabarit, et les pions peuvent être réajustés en fonction des mesures prises, suivant les calculs nécessaires pour effectuer, par exemple, un nivellement du gabarit. D'autres mesures peuvent être prises avec de l'outil de recalage à laser afin de s'assurer que les ajustements prises sont suffisants pour niveler l'appareil de reconditionnement (incluant le gabarit). Ce deuxième exercice de recalage et de nivellement est nécessaire afin d'obtenir le niveau de précision désirable lors du reconditionnement. Les angles et positions de l'appareil et du gabarit doivent être connus afin de pouvoir contrôler efficacement l'outil à reconditionnement de façon numérique, permettant le reconditionnement à précision.

Ensuite, dans les exemples où la pièce lourde est de la forme d'un disque et le plateau tournant est de forme annulaire, la position de la pièce lourde et la position du plateau tournant placé autour de l'anneau sont ajustées afin qu'elles soient concentriques à l'étape 609. Ce positionnement peut également être effectué à l'aide de l'outil de recalage à laser. La sonde du laser à poursuite est placée à différents endroits sur la pièce lourde et à différents endroits sur le gabarit. En fonction des mesures reçues de la sonde et du laser à poursuite, il est possible de calculer le centre de la pièce lourde et du gabarit, et quels déplacements sont nécessaires afin que les deux centres se rejoignent en utilisant des calculs tels qu'ils sont connus dans l'art. Les ajustements nécessaires peuvent également être obtenus en modifiant la hauteur ou l'emplacement des pions. La concentricité est préférable afin de faciliter le reconditionnement performé numériquement.

Par la suite, il peut y avoir une étape additionnelle de recalage visant à vérifier si le gabarit, le portique et l'outil de reconditionnement sont bien alignés, effectuant ces vérifications au long des axes x, y et/ou z à l'étape 610. Cette vérification peut également être effectuée à l'aide de l'outil de recalage à laser. Par exemple, il est possible de vérifier le déplacement de l'outil de reconditionnement au long de ces trois axes et de corriger toute différence de déplacement qui n'est pas prévue en utilisant, par exemple, des calles, ou en ajustant la hauteur des pions. Par exemple, il est possible de vérifier la position et les dimensions du portique vis-à-vis la pièce lourde et le gabarit, et d'effectuer tout ajustement ou correction de toute erreur au long des axes à l'aide de calles.

Une fois le recalage complété, il est maintenant possible d'effectuer le reconditionnement de la machine à l'étape 611. Le reconditionnement peut viser la réparation de certaines pièces ou effectuer certaines transformations dans la forme de la pièce lourde afin d'optimiser sa fonctionnalité. Le reconditionnement peut être, par exemple, un taillage ou usinage de la pièce lourde, ou du soudage de celle-ci. Ainsi, le bras robotique peut supporter, par exemple, un outil d'usinage et de soudage. Le processus de reconditionnement peut être entrepris entièrement de façon numérique, comme le recalage a permis d'obtenir des dimensions précises du gabarit, la pièce lourde et le placement de la pièce lourde par rapport au gabarit et au portique. Par ailleurs, le portique, joint au bras robotique, peut permettre à l'outil de reconditionnement d'avoir accès à l'entièreté d'une surface de la pièce lourde, afin d'effectuer le reconditionnement à tout endroit sur cette surface sans intervention manuelle.

Finalement, une fois la pièce lourde reconditionnée, elle peut être réinstallée. Par exemple, dans le cas d'une centrale hydroélectrique, la pièce lourde peut être réinstallée, soit, pour permettre à la turbine hydraulique de recommencer à générer de l'électricité. Cependant, comme le temps perdu à transporter la pièce lourde au site extérieur est évité, la période totale de non-fonctionnement de la turbine durant son reconditionnement est réduite, réduisant également les pertes de production qui s'y rattachent. Par ailleurs, le résultat du reconditionnement de la pièce lourde peut être comparable au résultat si cette pièce aurait été reconditionnée à un site extérieur.

Suivant le reconditionnement de la pièce, l'appareil de reconditionnement peut être démantelé et rangé jusqu'à la prochaine fois qu'un reconditionnement d'une pièce lourde serait nécessaire.

### PRODUCTION D'ÉLECTRICITÉ :

Le procédé de reconditionnement d'une pièce lourde peut être utilisé dans le cadre de la production d'électricité, telle que l'électricité produite par une centrale hydroélectrique ou des éoliens.

Par exemple, le système de production d'électricité peut produire de l'électricité jusqu'à temps qu'il est déterminé qu'il faut reconditionner une des pièces lourdes. Par exemple, le reconditionnement peut être nécessaire pour réparer un bris de la pièce, le mettre en état pour qu'elle soit plus performante, ou optimiser la forme de la pièce afin d'augmenter son efficacité. En conséquence, la pièce lourde en question peut être désinstallée du système de production d'électricité. Suivant la désinstallation, il est possible d'effectuer le reconditionnement de la pièce lourde en suivant le procédé décrit dans les présentes.

Suivant le reconditionnement de la pièce lourde, elle peut être réinstallée, et la production d'électricité peut recommencer. Tel que mentionné, l'étape de reconditionnement est accélérée en utilisant le présent procédé de reconditionnement, comme il n'est plus nécessaire de perdre du temps lors du transport de la pièce lourde à un site extérieur pour effectuer le reconditionnement.

Dans certains exemples, le procédé de production d'électricité est celui de la production d'hydroélectricité. Cette production peut s'effectuer dans une centrale hydroélectrique ou les pièces lourdes à reconditionner sont, par exemples, celles d'une turbine hydraulique utilisée pour la production d'hydroélectricité. Des exemples de pièces à reconditionner sont une roue mobile de type Francis, une roue mobile de type Kaplan, une aube directrice, un aspirateur, un alternateur, une aube de roue, un arbre ou un cercle de vannage. Il est apprécié que cette liste n'est pas limitative, où toute autre pièce utilisée dans une centrale hydroélectrique puisse être sujette à reconditionnement en respectant les présents enseignements.

### L'APPAREIL DE RECONDITIONNEMENT 100:

En se référant aux figures 1A, 1B, et 2, l'appareil de reconditionnement 100 sera présentement décrit en plus grand détail.

### LE GABARIT 150 :

Le gabarit 150 est un support qui fait le tour d'au moins une partie de la pièce lourde 140 et sert comme support au portique 110. Le gabarit 150 peut être de forme annulaire, faisant ainsi le tour de la pièce lourde 140. Toutefois, dans d'autres exemples, le gabarit 150 peut également avoir une autre forme, comme celle d'un cylindre, dépendamment de la forme des pièces à reconditionner. Dans certains exemples, le gabarit 150 est formé de plusieurs segments afin d'être transportable et facilement démontable. Le gabarit 150 peut être facilement rangé lorsqu'il n'est pas utilisé, ce qui est utile si l'appareil de reconditionnement 100 est gardé sur place, et sorti lorsque le reconditionnement d'une pièce s'avère nécessaire.

Dans certains exemples, le gabarit 150 peut avoir un plateau tournant composé d'une partie fixe 153 et une partie mobile 152. Chaque partie (fixe 153 et mobile 152) peut être formée à partir de plusieurs segments. Tel qu'il est démontré à la figure 2, dans un exemple, la partie fixe 153 et la partie mobile 152 sont respectivement formées par quatre segments (ex. en forme d'arc) de dimensions substantiellement égales. Toutefois, le nombre de segments de la partie fixe 153 et la partie mobile 152 peut être autre que quatre (ex. 2, 3, 6, etc.). La segmentation des parties composant le gabarit 150 facilite le transport et l'entreposage du gabarit 150. Toutefois, dans d'autres exemples, il est possible que le gabarit 150 soit composée d'une seule pièce et non de segments, ou qu'au moins une des parties fixe 153 et tournante 152 soit composée respectivement d'une seule pièce.

Les segments de la partie fixe 153 et de la partie mobile 152 peuvent être joints respectivement un à l'autre en utilisant des moyens de fixation 182, 183, 171, 172 et 173. Des exemples de moyens de fixation sont une goupille 182, des guides d'accouplement 173 et 183, un bouillon 172 et une goupille de guidage 171, etc. La goupille de guidage 171 et les guides d'accouplement 173 et 183 peuvent aussi faciliter l'alignement des segments de la partie fixe 153 et des segments de la partie mobile 152. Les moyens de fixation permettent préférablement l'alignement précis des segments mais offrent également une fixation fiable qui endurera le reconditionnement de la pièce, minimisant les déplacements lors du processus de reconditionnement.

Le gabarit peut également être muni de tiges centrales 156, des protrusions qui sont fixées dans le gabarit 150 (ex : la partie fixe 153 du gabarit) et qui peuvent être ajustées pour entrer en contact avec la pièce lourde 110 lorsque celle-ci est placée au centre du gabarit 150. Les tiges centrales 156 offrent une stabilité additionnelle à la pièce lourde 140, connectant ainsi le gabarit 150 et la pièce lourde 140.

Le gabarit 150 peut aussi avoir un mécanisme de déplacement permettant le déplacement d'au moins une partie de celui-ci par rapport au plancher, pour, par exemple, permettre la mobilisation du portique 110 joint au gabarit 150 afin de manipuler la position de l'outil d'usinage 116. Lorsque le gabarit 150 a un plateau tournant, le mécanisme de déplacement peut changer la position de la partie mobile 152 sur laquelle est montée le portique 110.

Ainsi, dans certains exemples, le gabarit 150, ou au moins une partie de celui-ci, comme l'anneau supérieur du plateau tournant, est configuré pour se déplacer par rapport au plancher. Cependant, comme le reconditionnement doit être effectué à précision, le déplacement du portique 110 doit aussi se faire de façon précise, enclenché par le déplacement du gabarit 150, lorsque le portique est joint, à au moins une extrémité, au gabarit 150. Ainsi, le plateau tournant ou le gabarit 150 sur lequel est joint au moins une des extrémités du portique 110 peut être déplacée à l'aide d'un système de pignons montés à un galet sans jeu à très haut rendement. Par exemple, un tel système peut être un système à précision de pignons à galets montés sur roulement qui engraine avec une crémaillère jointe audit gabarit, comme le *« Roller Pignon System »* de Nexen^{™}. Il est apprécié que d'autres mécanismes de déplacement du plateau tournant à précision puissent être utilisés. Tel qu'il est démontré dans la Figure 2, il peut y avoir deux crémaillères 181, placées sur chaque bord de la surface de la partie mobile 152 qui fait face avec la partie fixe 153. La crémaillère 181 peut également être de forme d'arc, afin d'épouser la forme du gabarit 150 si celui-ci a une forme d'anneau. Dans d'autres exemples, lorsque le gabarit est d'une forme autre qu'annulaire (ex : de forme droite), la crémaillère peut également être de forme droite. Les galets suiveurs 162 peuvent être montés soit sur un ou des deux côtés du gabarit 150 afin d'engrainer avec un ou les deux crémaillères 181. Le galet suiveur 162 peut être monté sur roulement et peut servir de connexion entre la partie fixe 153 à la partie mobile 152. Il peut y avoir plusieurs galets suiveurs 162. Dans les exemples ou la crémaillère 181 est de forme annulaire, le galet suiveur 162 peut être placé sur une surface du gabarit 150 perpendiculaire à la surface du gabarit 150 sur laquelle est montée la crémaillère 181. Le galet suiveur 162 peut être également monté sur un support 163, le support 163 fixé, par exemple, à la partie fixe 153 du gabarit 150 à l'aide d'un moyen d'ancrage (ex : une vis, un boulon). Le galet suiveur 162 peut également avoir un élément d'appui 161.

Dans d'autres exemples, le gabarit peut être fixe par rapport au sol. Dans ces exemples, le déplacement du bras robotique et du portique peut se faire indépendamment du gabarit, le gabarit n'ayant pas de mécanisme pour se déplacer.

### LES PIONS 154:

L'appareil de reconditionnement 100 peut avoir des pions 154 pour recevoir le gabarit 150 et/ou d'autres pions 154 pour recevoir la pièce lourde 140. Dans certains exemples, les pions 154 ont préférablement une résistance et une durabilité pour être capable de supporter le poids d'une pièce lourde 140 qui pèsent des centaines de tonnes.

Les pions 154 sont des pièces destinées à servir de butée et/ou d'appui. Les pions sont donc des supports (par exemple, soit pour recevoir le plateau tournant du gabarit 150 et/ou la pièce lourde 140) qui offrent une ajustabilité en hauteur afin de pouvoir mettre à niveau, soit, par exemple, le gabarit 154 (ex : son plateau tournant) par rapport à la pièce lourde 140.

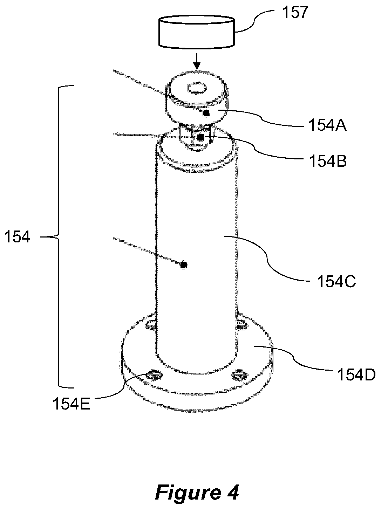

En faisant référence à la Figure 4, un exemple de pion est le pion 154 qui a un corps 154C, un mécanisme d'ajustement de la hauteur telle qu'une béquille réglable 154B, une tête 154A et une base 154D.

La béquille réglable 154B, tel qu'elle est connue dans l'art, est une partie ajustable qui permet d'ajuster la hauteur du pion 154 afin d'accommoder soit la pièce lourde 140 ou le gabarit 150. La béquille réglable 154B peut avoir un contre noix et une tige filetée, connectée au contre noix, pour ajuster la hauteur du pion 154. Le corps 154C peut avoir un tube mécanique adapté pour recevoir au moins une partie de la tige filetée de la béquille réglable 154B en fonction des ajustements de la hauteur des pions 154.

La tête 154A du pion 154 sert comme surface sur laquelle reposera la pièce lourde 140 ou le gabarit 150. La tête 154A peut aussi être adaptée pour recevoir une cale 157, la cale 157 séparant la tête 154A du pion 154 et la pièce lourde 140 ou le gabarit 150, minimisant l'usure causée soit par la friction entre le pion 154 et la pièce lourde 140.

Dans certains exemples, la base 154D peut aussi avoir des orifices pour recevoir des moyens d'ancrage pour ancrer le pion 154 à un plancher. Les moyens d'ancrage peuvent être, par exemple, des bouillons, des vices, des rivets. Les moyens d'ancrage accordent une stabilité additionnelle à l'appareil de reconditionnement 100. Ceci empêche le déplacement non-voulu des pions 154 lors du reconditionnement ou suivant l'installation et le recalage de l'appareil à reconditionnement.

Dans certains exemples, le corps du pion 154 peut être en acier.

### LE PION CENTRAL 151 :

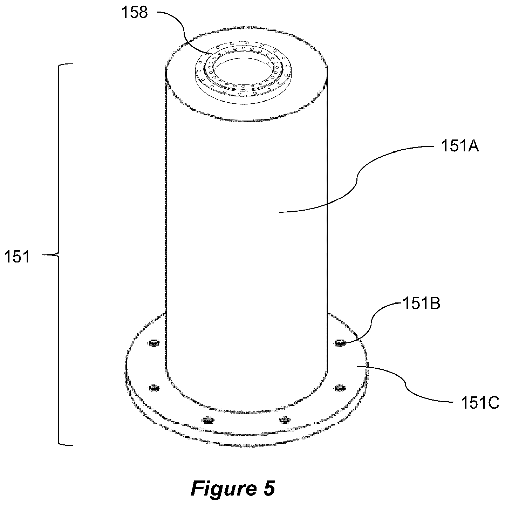

Référence est faite maintenant à la figure 5, illustrant un pion central exemplaire 151. Le pion central 151 est adapté pour être placé au centre du gabarit 150. Le pion central 151 est adapté à recevoir une des extrémités du portique 110.

Une table tournante 158 peut être montée à une surface supérieure du pion central 151. La table tournante 158 est adaptée à recevoir une extrémité du portique 110, permettant au portique 110 de suivre l'angle de rotation de l'extrémité du portique monté au gabarit 150 (dans les exemples où le portique 110 est monté au gabarit 150). La table tournante 158 peut être composée de deux anneaux avec un roulement. Dans certains exemples, le mécanisme de roulement de la table tournante 158 est à précision et sans jeu.

Le pion central 151 a aussi un corps 151A. Le corps 151A du pion central 151 peut être en acier.

Le pion central 151 peut aussi avoir une base 151C pour donner un appui au pion central 151 sur le plancher et pour stabiliser le pion central 151 sur le plancher. La base 151C peut être de la forme d'un anneau ou d'un disque. La base 151C peut aussi avoir une autre forme, par exemple, celle d'un parallélogramme (ex : carré, rectangle).

La base 151C peut aussi avoir des trous d'ancrage 151C afin d'ancrer le pion central 151 au plancher en utilisant des moyens d'ancrage. Des moyens d'ancrage traversant les trous d'ancrage 151C et entrant dans le plancher peuvent être, par exemple, des bouillons, des rivets, des vices. Les trous d'ancrage 151C et les moyens d'ancrage apportent une stabilité additionnelle au pion central 151 et à l'appareil de reconditionnement. Cette stabilité additionnelle du pion central 151 est particulièrement désirable dans, par exemple les cas où celui-ci reçoit le portique 110, afin de minimiser des mouvements soudains et non-désirables lors du reconditionnement, ces mouvements engendrant possiblement des sources d'erreur.

Dans certains exemples, le pion central peut également avoir un mécanisme d'ajustement (non-illustré). Ce mécanisme d'ajustement peut permettre de modifier la hauteur du pion central. Comme la surface supérieure du pion central reçoit dans certains cas une extrémité du portique, l'ajustement de la hauteur du pion central peut être désirable pour accommoder, par exemple, des portiques, des bras robotiques ou des outils de reconditionnement de tailles variables. Par ailleurs, l'ajustement du pion central peut aussi être désirable pour accommoder des pièces lourdes de différentes tailles, ou la hauteur du gabarit 150.

Le pion central 150 peut aussi être entouré par des sous-pions 155. Les sous-pions peuvent être adaptés pour recevoir une partie de la pièce lourde 140 et offrir un support additionnel à celle-ci, pouvant augmenter ainsi la stabilité de la pièce lourde 140. Le positionnement des sous-pions 155 vis-à-vis le pion central 151 peut être obtenu, par exemple, grâce aux lectures données par l'outil de recalage à laser.

### LE PORTIQUE 110 :

L'appareil de reconditionnement a une monture pour recevoir un bras robotique. Dans certains exemples, cette monture peut inclure un portique.

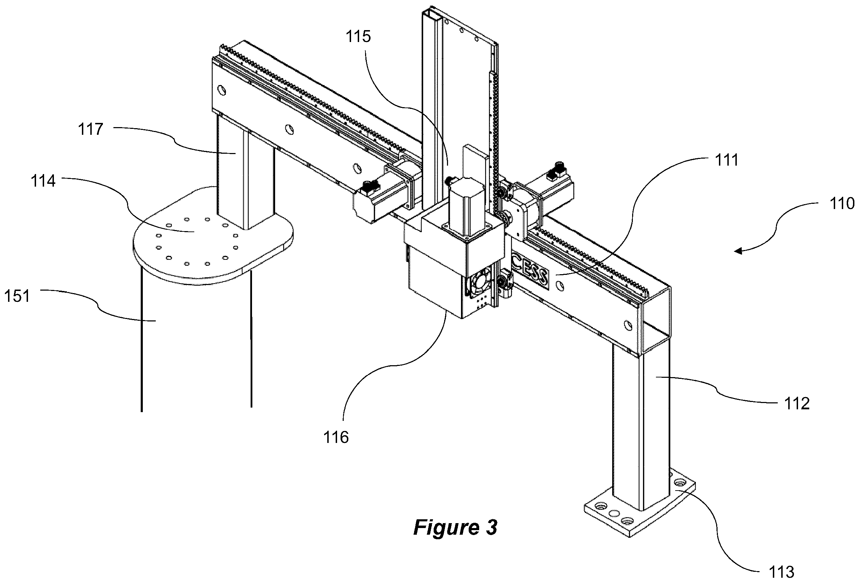

Référence est présentement faite à la figure 3, illustrant un portique 110 sur lequel est monté un bras robotique de précision 115 portant un outil de reconditionnement 116. Dans certains exemples, le portique 110 est appuyé à une de ses extrémités (ex : 117) à un pion central 151, et, à son autre extrémité (ex : extrémité 112), à une surface 113 joint au gabarit 150 (ou, ex., son plateau tournant composé par les parties 152 et 153).

Le portique 110 peut être joint à une surface d'attache 114 connectée au pion central 151.

Dans d'autres exemples, le portique peut être joint à ses deux extrémités au gabarit, par exemple à son plateau tournant.

Le portique peut également avoir un pont 111 connectant ses deux extrémités. Le bras robotique 115 peut être monté au pont 111. Le bras robotique 115 peut glisser au long du pont 111, afin d'assister au déplacement de l'outil de reconditionnement 116 à certaines parties de la pièce lourde 114, utilisant, par exemple, un mécanisme de glissement. Le bras robotique 115 en est un tel qu'il est connu dans l'art.

Dans les exemples où le gabarit 150 possède un mécanisme de déplacement (ex. à moteur) par rapport au plancher, le portique 110 est joint au gabarit 150 (et au pion central 151) afin de permettre le déplacement du portique 110. Si le gabarit 150 à la forme d'un anneau, le déplacement du portique 110 peut être celui d'une rotation autour du pion central 151, le portique suivant le rayon du cercle définissant le gabarit 150. Dans les exemples ou portique 110 est joint à ses deux extrémités au gabarit 150, le déplacement du portique 110 peut également être une rotation, les deux extrémités du portique 110 se déplaçant en suivant la forme annulaire du gabarit 150.

L'outil de reconditionnement 116 est joint au bras robotique 115. L'outil de reconditionnement 116 peut être, par exemple, un outil d'usinage, adapté à enlever du matériel de la pièce lourde tel qu'il est connu dans l'art. L'outil de reconditionnement 116 peut aussi être un outil de soudage pour ajouter du métal à la pièce lourde tel qu'il est connu dans l'art. Il est apprécié que l'outil de reconditionnement 116 puisse être tout autre appareil tel qu'il est connu dans l'art pour effectuer le reconditionnement de la pièce lourde.

Le déplacement du portique 110, du bras robotique 115 et du portique 110 peut être effectué de façon numérique, par le biais d'un système informatique. Le système informatique peut envoyer des commandes pour contrôler la position des éléments de l'appareil de reconditionnement 100 et effectuer le reconditionnement qui est nécessaire. Par exemple, lorsque le gabarit 150 a un plateau tournant, il est possible de contrôler le plateau tournant avec le système informatique (ex : le système informatique et/ou le système à roulement constituant un système de déplacement), les commandes effectuant un déplacement à précision de la partie mobile 153 du plateau tournant. Le bras robotique 115 et l'outil de reconditionnement 116 sont également contrôlables électroniquement, afin de pouvoir reconditionner la pièce en fonction de certains paramètres fournis, par exemple, par le système informatique.

### LE SYSTÈME DE RECALAGE 700:

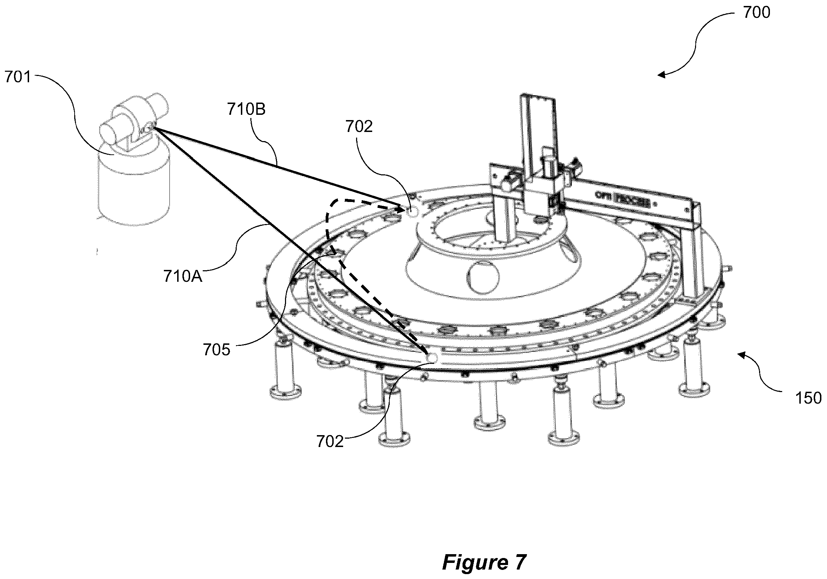

Référence est maintenant faite à la figure 7, illustrant un système de recalage 700 pour effectuer le recalage de l'appareil de reconditionnement 100 lors, par exemple, d'un procédé de reconditionnement d'une pièce lourde telle que décrite dans les présentes. Le recalage de l'appareil de reconditionnement 100 et de la pièce lourde 140 peut être effectué à l'aide d'un outil de recalage à laser 701. L'outil de recalage à laser 701 peut être un laser de poursuite, et une sonde 702 communiquant avec le laser à poursuite, tels qu'ils sont connus dans l'art. Par exemple, le laser à poursuite avec la sonde peut être le modèle Leica Absolute Tracker AT402^{™}.

L'outil de recalage à laser 701 peut partager des lectures quant aux dimensions de l'appareil de reconditionnement 100, tel que certaines parties de son gabarit 150, avec l'utilisateur. En fonction de ces lectures, l'utilisateur peut ajuster le positionnement et la hauteur des composantes de l'appareil de reconditionnement 100, par exemple, en ajustant la hauteur de certains pions 154, ou en centrant le gabarit 150 vis-à-vis la pièce lourde 140.

Ainsi, lorsque l'outil de recalage à laser 701 inclut un laser à poursuite et une sonde 702, il est possible de placer la sonde 702 à différents endroits sur une surface de l'appareil à reconditionnement 100 (ex : le gabarit 150) et obtenir les lectures. Une fois une lecture obtenue, il est possible de déplacer la sonde 702 à un autre endroit (ex : déplacement 705), afin d'obtenir de nouvelles mesures. À une première position, la sonde et le laser à poursuite peuvent faire une première lecture 710A, et, suivant un déplacement 705 de la sonde 702, elles peuvent faire une deuxième lecture 710B au deuxième endroit. Le repositionnement de la sonde 702, la communication avec le laser de poursuite, et l'obtention de lectures, peuvent se faire autant de fois que nécessaire pour obtenir suffisamment de renseignements sur les dimensions et position des diverses composantes de l'appareil de reconditionnement 100 et de la pièce lourde 140 afin d'effectuer leur recalage, nécessaires pour arriver au niveau de précision souhaité pour reconditionner la pièce lourde. Par exemple, le recalage de l'appareil de reconditionnement et de la pièce lourde peut se faire à fur et à mesure que les lectures sont partagées par l'outil de recalage à laser 701, ou suivant l'obtention d'une série de lectures.

La présente description a été présentée pour des fins d'illustrations de l'invention. Cette description de l'invention n'est pas supposée être exhaustive, ni de limiter les possibles variantes de celle-ci. Plusieurs modifications et variantes seront évidentes ou apparentes pour une personne moyennent versée dans son art.

## Revendications

1. Procédé de reconditionnement sur place d'une pièce lourde montée au plancher, le procédé comprenant :
assembler un gabarit monté sur le plancher pour être disposé en proximité de la pièce à reconditionner également montée sur le plancher, ledit gabarit appuyant une monture sur laquelle est montée un bras robotique de précision portant au moins un appareil d'usinage;
recaler ladite pièce et ledit gabarit à l'aide d'un outil à recalage à précision afin de permettre ledit gabarit, ladite monture et ledit bras robotique de former un appareil d'usinage à précision; et
usiner ladite pièce utilisant ledit appareil d'usinage à précision, le procédé étant **caractérisé par** :
avant ledit assemblage, positionner des pions sur le plancher à l'aide d'un outil à recalage à précision laser et ajuster la hauteur desdits pions à l'aide d'un outil à recalage à précision laser, lesdits pions positionnés pour recevoir ladite pièce et ledit gabarit;
ledit recalage de ladite pièce et ledit gabarit est fait à l'aide d'un outil à recalage à précision laser;
et ledit assemblage dudit gabarit est effectué afin que ledit gabarit soit disposé autour de la pièce à reconditionner, ladite monture comprenant un portique, et ledit gabarit appuyant ledit portique à ses deux extrémités, ledit gabarit étant configuré afin qu'une partie dudit gabarit se déplace par rapport audit plancher, ledit reconditionnement comprenant le déplacement de ladite partie dudit gabarit par rapport audit plancher, ledit gabarit comprenant un pion central et un plateau tournant de forme annulaire centré autour dudit pion central, ladite étape d'assemblage comprenant la disposition de ladite pièce autour dudit pion central, et ledit portique étant appuyé à une de ses dites deux extrémités sur ledit pion central et à l'autre de ses dites deux extrémités sur ledit plateau tournant.

2. Procédé selon la revendication 1, **caractérisé en ce que** ledit déplacement de ladite partie dudit gabarit s'effectue à l'aide d'un système à précision de pignons à galets montés sur roulement qui engraine avec une crémaillère jointe audit gabarit.

3. Procédé selon la revendication 1, **caractérisé en ce que** ledit plateau tournant de forme annulaire comprend des segments formant deux anneaux superposés, ledit assemblage comprenant la disposition et l'assemblage desdits segments formant lesdits deux anneaux superposés autour de ladite pièce.

4. Procédé de production d'électricité renouvelable par le biais d'un système de production d'électricité composé de pièces lourdes utilisées dans le système de production d'électricité, le procédé de production d'électricité **caractérisé en ce qu'**il comprend:
produire de l'électricité;
déterminer si une desdites pièces du système de production d'électricité requiert du reconditionnement;
reconditionner ladite une desdites pièces selon le procédé de reconditionnement sur place d'une quelconque des revendications 1 à 3; et
recommencer la production d'électricité.

5. Un appareil de reconditionnement à précision d'une pièce lourde montée au plancher, l'appareil comprenant un gabarit comprenant :
un pion central; et
un plateau tournant de forme annulaire centré autour dudit pion central;
un portique avec deux extrémités configurées pour être appuyées à une de ses dites deux extrémités sur ledit pion central et l'autre de ses dites deux extrémités sur ledit plateau tournant;
un bras robotique montable sur ledit portique, ledit bras robotique configuré pour recevoir un appareil d'usinage pour usiner ladite pièce lourde; l'appareil **caractérisé en ce qu'**il comprend en outre : au moins trois pions ajustables en hauteur pour :
recevoir ledit plateau tournant afin de permettre une mise à niveau dudit plateau tournant; ou
recevoir ladite pièce lourde et afin de permettre une mise à niveau de ladite pièce lourde.

6. L'appareil selon la revendication 5, **caractérisé en ce que** ledit bras robotique comprend au moins un appareil d'usinage.

7. L'appareil selon revendication 6, **caractérisé en ce que** ledit au moins un appareil d'usinage comprend un outil de soudage adapté à ajouter du métal à ladite pièce.

8. L'appareil selon l'une quelconque des revendications des revendications 5 à 7, **caractérisé en ce que** ledit plateau tournant comprend une partie fixe et une partie mobile, ladite partie fixe étant connectée à ladite partie mobile par un système de roulement à précision.

9. L'appareil selon la revendication 8, **caractérisé en ce que** ledit système de roulement à précision comprend un système à précision de pignons à galets montés sur roulement qui engraine avec une crémaillère jointe audit gabarit.

## Patentansprüche

1. Verfahren zum Wiederertüchtigen eines schweren, am Boden montierten Teils vor Ort, wobei das Verfahren die folgenden Schritte umfasst:
Zusammenbau einer bodenmontierten Schablone, um in der Nähe des ebenfalls bodenmontierten, zu Wiederertüchtigenden Teils angeordnet zu werden, wobei die Schablone eine Halterung abstützt, auf der ein Präzisionsroboterarm montiert ist, der mindestens eine Bearbeitungsvorrichtung trägt;
Neuausrichten des Werkstücks und der Schablone mit einem Präzisions-Neuausrichtungswerkzeug, so dass die Schablone, die Halterung und der Roboterarm eine Präzisionsbearbeitungsvorrichtung bilden, und
Bearbeiten des Werkstücks unter Verwendung der Präzisionsbearbeitungsvorrichtung,
wobei das Verfahren **gekennzeichnet ist durch** die folgenden Schritte:
vor dem Zusammenbau Positionieren von Stiften auf dem Boden mit einem Laserpräzisions-Nachstellwerkzeug und Einstellen der Höhe der Stifte mit einem Laserpräzisions-Nachstellwerkzeug, wobei die Stifte so positioniert sind, dass sie das Werkstück und die Schablone aufnehmen;
wobei die Neuausrichtung des Teils und der Schablone mit Hilfe eines Laserpräzisions-Neuausrichtungswerkzeugs durchgeführt wird,
und wobei das Zusammensetzen der Schablone so durchgeführt wird, dass die Schablone um das aufzubereitende Teil herum angeordnet ist, wobei die Halterung ein Portal umfasst und die Schablone das Portal an beiden Enden stützt, wobei die Schablone so konfiguriert ist, dass sich ein Teil der Schablone relativ zum Boden bewegt, wobei das Aufbereiten das Bewegen des Teils der Schablone relativ zum Boden umfasst, wobei die Schablone einen zentralen Stift und einen ringförmigen Drehtisch umfasst, der um den zentralen Stift zentriert ist, wobei der Montageschritt das Anordnen des Teils um den zentralen Stift umfasst und wobei das Portal an einem seiner beiden Enden auf dem zentralen Stift und am anderen seiner beiden Enden auf dem Drehtisch abgestützt ist.

2. Verfahren nach Anspruch 1, **dadurch gekennzeichnet, dass** die Bewegung des Teils der Schablone mithilfe eines Präzisionssystems aus gelagerten Rollenzahnrädern erfolgt, das mit einer der Schablone beigefügten Zahnstange kämmt.

3. Verfahren nach Anspruch 1, **dadurch gekennzeichnet, dass** der ringförmige Drehtisch Segmente umfasst, die zwei übereinander liegende Ringe bilden, wobei die Montage das Anordnen und Zusammenfügen der Segmente, die die zwei übereinander liegenden Ringe bilden, um das Teil herum umfasst.

4. Verfahren zur Erzeugung von erneuerbarer Elektrizität mittels eines Stromerzeugungssystems, das aus schweren Teilen besteht, die in dem Stromerzeugungssystem verwendet werden, wobei das Stromerzeugungsverfahren **dadurch gekennzeichnet ist, dass** es die folgenden Schritte umfasst:
Erzeugen von Elektrizität;
Bestimmen, ob eines der Teile des Stromerzeugungssystems wiederertüchtigt werden muss;
Wiederertüchtigen des einen der Teile gemäß dem Vor-Ort-Wiederertüchtigungsverfahren nach einem der Ansprüche 1 bis 3; und
Wiederaufnahme der Stromerzeugung.

5. Vorrichtung zum hochgenauen Wiederertüchtigen eines schweren, bodenmontierten Teils, wobei die Vorrichtung Folgendes umfasst:
eine Schablone, die Folgendes umfasst:
einen zentralen Zapfen; und
einen ringförmigen Drehtisch, die um den zentralen Stift zentriert ist;
(b) ein Portal mit zwei Enden, die so konfiguriert sind, dass sie mit einem der beiden Enden auf dem zentralen Stift und mit dem anderen der beiden Enden auf dem Drehtisch aufliegen;
(c) einen Roboterarm, der auf dem Portal montiert werden kann, wobei der Roboterarm so konfiguriert ist, dass er eine Bearbeitungsvorrichtung zum Bearbeiten des schweren Werkstücks aufnimmt; wobei die Vorrichtung **dadurch gekennzeichnet ist, dass** sie außerdem Folgendes umfasst:
(d) mindestens drei höhenverstellbare Stifte zum
Aufnehmen des Drehtischs, um eine Nivellierung des Drehtisches zu ermöglichen; und
Aufnehmen des schweren Werkstücks, um eine Nivellierung des schweren Werkstücks zu ermöglichen.

6. Vorrichtung nach Anspruch 5, **dadurch gekennzeichnet, dass** der Roboterarm mindestens eine Bearbeitungsvorrichtung umfasst.

7. Vorrichtung nach Anspruch 6, **dadurch gekennzeichnet, dass** die mindestens eine Bearbeitungsvorrichtung ein Schweißwerkzeug umfasst, das dazu geeignet ist, dem Werkstück Metall hinzuzufügen.

8. Vorrichtung nach einem der Ansprüche der Ansprüche 5 bis 7, **dadurch gekennzeichnet, dass** der Drehtisch einen festen Teil und einen beweglichen Teil umfasst, wobei der feste Teil mit dem beweglichen Teil durch ein Präzisionslagersystem verbunden ist.

9. Vorrichtung nach Anspruch 8, **dadurch gekennzeichnet, dass** das Präzisionslagersystem ein Präzisionssystem aus gelagerten Rollenzahnrädern umfasst, das mit einer an die Schablone angefügten Zahnstange kämmt.

## Claims

1. A method for the in-situ reconditioning of a heavy piece mounted on a floor, comprising:
assembling a jig mounted on said floor to be placed in the vicinity of the piece to be reconditioned also mounted on said floor, said jig supporting a frame on which is mounted a precision robotic arm carrying at least one machining unit;
aligning said piece and said jig with a precision alignment tool to allow said jig, said frame and said robotic arm to form a precision machining apparatus; and
machining said piece using said precision machining apparatus, the method being **characterized in that**:
prior to said assembling, positioning stilts on the floor using a precision laser alignment tool and adjusting height of said stilts using a precision laser alignment tool, said stilts positioned to receive said piece and said jig;
said alignment of said piece and said jig being made using a precision laser alignment tool;
and said assembly of said jig is performed such that said jig is arranged around said piece to be reconditioned, said frame comprising a gantry, and said jig pressing said gantry at both ends, said jig being configured such that a portion of said jig moves relative to said floor, said reconditioning comprising moving said portion of said jig relative to said floor, said jig comprising a central stilt and an annular turntable centered around said center stilt, said assembling step comprising placing said piece around said central stilt, and said gantry being pressed at one of said two ends on said central stilt and at the other of its said two ends on said turntable.

2. The method of claim 1, **characterized in that** said moving of said portion of said jig is performed by means of a precision system of bearing-supported roller pinions which engages with a rack joined to said jig.

3. The method of claim 1, **characterized in that** said annular turntable comprises segments forming two superposed rings, said assembling comprising placing and assembling said segments forming said two superposed rings around said piece.

4. A method of producing renewable electricity through an electricity generation system comprising heavy pieces used in said electricity generation system, said electricity generation method **characterized in that** it comprises:
producing electricity;
determining whether one of said pieces of the electricity generation system requires reconditioning;
reconditioning said one of said pieces according to the in-situ reconditioning method of any of claims 1 to 3; and
resumption of producing electricity.

5. A precision reconditioning apparatus of a heavy piece mounted on a floor, said apparatus comprising:
a jig comprising:
a central stilt; and
an annular turntable centered around said central stilt;
a gantry with two ends configured to be pressed at one of said two ends on said central stilt and the other of its said two ends on said turntable; and
a robotic arm mountable on said gantry, said robotic arm configured to receive a machining apparatus for machining said heavy piece; the apparatus **characterized in that** it further comprises:
at least three height-adjustable stilts for:
receiving said turntable to enable said turntable to be leveled; or
receiving said heavy piece and for enabling said heavy piece to be leveled.

6. The apparatus according to claim 5, **characterized in that** said robotic arm comprises at least one machining apparatus.

7. The apparatus according to claim 6, **characterized in that** said at least one machining apparatus comprises a welding tool adapted to add metal to said piece.

8. The apparatus according to any of the claims of claims 5 to 7, **characterized in that** said turntable comprises a fixed portion and a movable portion, said fixed portion being connected to said movable portion by a precision rolling system.

9. The apparatus according to claim 8, **characterized in that** said precision rolling system is a precision system of bearing-supported roller pinions which engages with a rack joined to said jig.
